# EUROPÄISCHE PATENTANMELDUNG

(11) **EP 1 750 084 A1**
(43) Veröffentlichungstag der Anmeldung: **07.02.2007**
(21) Anmeldenummer: 06013987.0
(22) Anmeldetag: 06.07.2006
(51) Int. Cl.: G01B 7/13, F41A 31/02

(54) **Messeinrichtung zum Messen eines Innendurchmessers, insbesondere in einem Waffenrohr**

(30) Priorität: 04.08.2005 DE 102005037433
(71) Anmelder: Rheinmetall Waffe Munition GmbH, 40880 Ratingen (DE)
(72) Erfinder: Bilger, Gerhard, 78730 Lauterbach (DE)
(74) Vertreter: Dietrich, Barbara

(57) **Zusammenfassung**

Es wird vorgeschlagen, eine Messeinrichtung (1) mit einer Messgabel (2) auszustatten, die wenigstens zwei miteinander verbundene Biegebalken (2.1, 2.2) besitzt, wobei wenigstens ein Biegbalken (2.1, 2.2) seitlich wenigstens eine Tastkuppe (5, 6) aufweist. An den beiden Biegebalken (2.1, 2.2) der Messgabel (2) sind Dehnmessstreifen (7 -10) vorgesehen, die über elektrische Anschlüsse mit einer Auswerteeinheit verbunden sind. Durch die mechanische Beanspruchung an wenigstens einem Biegebalken (2.1, 2.2) wird durch Dehnungsmessung mit Hilfe der Dehnmessstreifen (7 -10) ein Weg gemessen und zur Auswertung gebracht. Durch beidseitiges Bekleben der Biegebalken (2.1, 2.2) wird zudem eine Temperaturkompensation erreicht.

## Beschreibung

Die Erfindung betrifft ein Messgerät zum Messen eines Innendurchmessers nach dem Oberbegriff des Patentanspruchs 1.

Ein Innenmessgerät ist aus der DD 238 442 A1 bekannt und dient zur Bestimmung von Innendurchmessern an dünnwandigen flexiblen und zylindrischen Werkstücken. Dabei erfährt ein Grundkörper, der in einem Bewegungselement mit Kegelwinkel und einem aufgesetzten Kugelring geführt ist, eine Veränderung seiner Relativlänge in Abhängigkeit der Änderung des IST- Durchmessers. Erreicht wird dabei auch, dass der Zentriervorgang und der Messvorgang über eine Lösung erfolgen.

Ein Innenmessgerät für Hohlkörper mit unrundem Innenquerschnitt offenbart die DE 296 07 513 U1. Das Innenmessgerät besteht dabei aus einem Schaft, der einen Messkopf trägt und einen Transmitter zum Übertragen von Messwerten auf ein Registriergerät enthält, zwei Längsstützen, die am Messkopf in Bezug auf den Schaft radial angeordnet und voneinander abgewandt sind, zwei Tastern, die an je einer der Längsstützen angeordnet sind, wobei wenigstens einer dieser Taster radial federnd abgestützt und mit dem Transmitter verbunden ist und zwei Querstützen, die am Messkopf ebenfalls voneinander abgewandt, gegen die Längsstützen jedoch winkelversetzt, angeordnet sind und je einen Zusatztaster tragen. Einer der Zusatztaster ist radial federnd abgestützt und mit einem weiteren Transmitter verbunden.

Der DD 277 508 A1 ist ein radial einstellbares Messgerät zum Messen der Innendurchmesser von Bohrungen entnehmbar. Das als Einpunkt-Messelement bezeichnete Messgerät weist ein Lasermesssystem auf.

Eine Messeinrichtung mit einem Messdorn, an dessen Umfang ein beweglicher Messfühler zwischen einer erhabenen Messstellung und einer inneren Vorschubstellung radial verschiebbar gelagert ist, beschreibt die DD 276 611 A3.

Mit der DE 102 33 539 A1 werden ein Verfahren und eine Vorrichtung zur Messung von Werkstückbohrungen publiziert. Zur Vereinfachung wird vorgeschlagen, in die Bohrung einen mit einem Stift verbundenen zylindrischen Messkörper einzubringen, diesen durch Verkanten an der Wandung freizugeben und die dabei eingenommene Schrägstellung messtechnisch zu erfassen und auszuwerten.

Eine Vorrichtung zum Messen der Innendurchmesser eines Rohres definiert die DE 39 22 937 C2. Unter Verweis auf die Problematik des Messens des Innendurchmessers bei Waffenrohren wird eine Messeinheit vorgeschlagen, die aus einem Messkopf besteht, der aus radial bewegbaren Messtastern oder Messfühlern gebildet wird, die mit ihrer vorderen Konusspitze gegen ein Spreizelement ansteht. In der Ausgangsstellung und vor Beginn einer Messung befindet sich der Messkopf, wie bereits aus der DE 30 03 415 A1 bekannt, mit den Messtastern im Rohrgehäuse. Zuerst wird die Kalibrierung vorgenommen, in dem die Messtaster auf das Innenmaß eines Kalibrierringes eingestellt werden. Dieser ist im Rohrgehäuse vorgesehen und weist einen Innendurchmesser auf, der jeweils dem Innendurchmesser des zu vermessenden Rohres entspricht.

Hier greift die Erfindung die Aufgabe auf, eine einfache Messeinrichtung bzw. ein einfaches Messgerät aufzuzeigen, mit welchem in einfacher Art und Weise aber mit einer hohen Genauigkeit der Innendurchmesser insbesondere eines Waffenrohres gemessen werden kann.

Gelöst wird die Aufgabe durch die Merkmale des Patentanspruchs 1. Vorteilhafte Ausführungen sind in den Unteransprüchen enthalten.

Der Erfindung liegt die Idee zugrunde, eine Messgabel mit wenigstens zwei miteinander verbundenen Biegebalken in die Messeinrichtung einzubinden, wobei wenigstens ein Biegebalken seitlich wenigstens eine Tastkuppe aufweist. An den beiden Biegebalken der Messgabel sind Dehnmessstreifen vorgesehen, die über elektrische Anschlüsse mit einer Auswerteeinheit verbunden sind. Durch die mechanische Beanspruchung an wenigstens einem Biegebalken wird durch Dehnungsmessung mit Hilfe des bzw. der Dehnmessstreifen ein Weg gemessen und zur Auswertung gebracht. Durch beidseitiges Bekleben der Biegebalken wird zudem eine Temperaturkompensation erreicht.

Vorteilhaft ist, dass mit der einfachen Lösung gleichzeitig auch ein robuster Aufbau insbesondere für das Messen des Innendurchmessers eines Rohres mit Zug- und Feldprofilen realisiert wird. Die Messeinrichtung besitzt je nach Konstruktion einen großen Messbereich und ist als Durchzugskörper in langen Bohrungen verwendbar. Die Wiederholgenauigkeit der Messung liegt bei +/- 5 µm bei einem Messbereich von 1 mm.

Anhand eines Ausführungsbeispiels mit Zeichnung soll die Erfindung näher erläutert werden.

Es zeigt
- Fig. 1: eine Draufsichtdarstellung auf eine Messeinrichtung,
- Fig. 2: die Messeinrichtung in einem Waffenrohr.

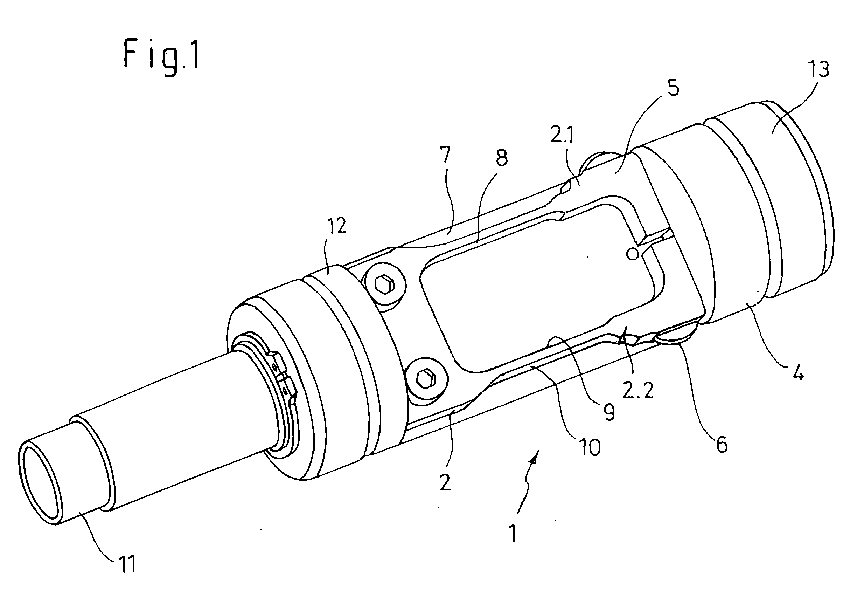

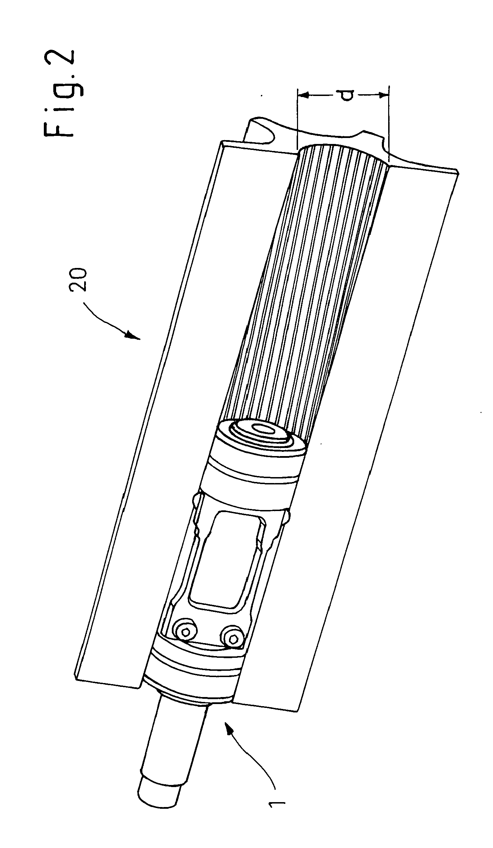

In Fig. 1 ist mit 1 eine Messeinrichtung zum Messen eines Innendruchmessers d gekennzeichnet. Die Messeinrichtung 1 weist eine Messgabel 2 auf, die aus wenigstens zwei miteinander verbundenen Biegebalken 2.1 und 2.2 besteht, welche zueinander bewegbar sind. Im Bereich des verbundenen Teils ist die Messgabel 2 mit einem Gehäuse bzw. Grundkörper 4 der Messeinrichtung 1 fest verbunden. Vorzugsweise im oberen Bereich der Biegebalken 2.1, 2.2 befinden sich an jedem der Biegebalken 2.1 und 2.2 eine Tastkuppe 5, 6. An jedem Biegebalken 2.1, 2.2 sind des Weiteren wenigstens zwei Dehnmessstreifen 7, 8, 9, 10 eingebunden, die über elektrische Leitungen (nicht näher dargestellt) mit einer gleichfalls nicht näher dargestellten Auswerteeinheit elektrisch verbunden sind. Die elektrischen Anschlüsse bzw. Leitungen werden dazu über eine Anschlussdose 11 aus der Messeinrichtung 1 geführt. Am Grundkörper 4 der Messeinrichtung 1 befinden sich zwei auswechselbare Zentrierringe 12, 13. Beide sind so angebracht, dass die Messeinrichtung 1 in Funktion zentriert im Rohr 20 geführt wird, vorzugsweise oberhalb der Anschlussdose 11 sowie als hinterer Abschluss des Messeinrichtung 1 (Fig. 2).

Die Funktionsweise ist bei vier Dehnmessstreifen 7 - 10 ist in diesem Ausführungsbeispiel wie folgt:
Nach einer hier nicht weiter zu betrachtenden Kalibrierung wird die Messeinrichtung 1 in das Rohr 20 gebracht. Dabei greifen die Tastkuppen 5, 6 an den Rohrinnendurchmesser d und verstellen dann die Biegebalken 2.1, 2.2 zueinander, wenn der Rohrinnendurchmesser d kleiner als das Kalibriermaß bzw. voneinander weg, wenn der Rohrinnendurchmesser d größer als das Kalibriermaß ist. Die mechanische Beanspruchung der Biegebalken 2.1, 2.2 wirkt dabei auch auf die an den Biegebalken 2.1, 2.2 angebrachten Dehnmessstreifen 7 - 10. Die äußeren Dehnmessstreifen 7, 10 werden die einem kleineren Rohrinnendurchmesser d gedehnt, die inneren 8, 9 gestaucht, bei einem größeren umgekehrt. Eine Stauchung wirkt auf den Dehnmessstreifen 8, 9 widerstandsreduzierend, eine Dehnung der Dehnmessstreifen 7, 10 widerstandserhöhend. Die Änderung der Widerstandswerte der Dehnmessstreifen 7 - 10 ist dann ein Maß des Innendurchmessers d.

Bedingt durch die elektrische Verschaltung der Dehnmessstreifen 7 -10 wird ein elektrisches Signal an die Auswerteeinheit gegeben und ausgewertet. Dies kann unter Einbeziehung eines in der Messeinrichtung 1 befindlichen zwischengeschalteten Verstärkers erfolgen.

Bei der Verwendung von nur einem Dehnmessstreifen 7 bis 10 wird die einfache Widerstandsänderung an diesem Dehnmessstreifen 7 bis 10 ausgewertet, die bei der mechanischen Beanspruchung von einem der Biegebalken 2.1, 2.2 hervorgerufen wird.

Das Vorhandensein von je einer Tastkuppe 5, 6 an jedem Biegebalken 2.1, 2.2 ist für die Funktionsweise prinzipiell nicht notwendig. Die Messeinrichtung 1 kann auch mit nur einer Tastkuppe 5 oder 6 arbeiten, wobei dann nur ein innerer Dehnmessstreifen 8 oder 9 und/oder ein äußerer Dehnmessstreifen 7 oder 10 gestaucht bzw. gedehnt werden.

## Patentansprüche

1. Messeinrichtung (1) zum Messen eines Innendurchmessers (d), insbesondere in einem Waffenrohr (20), **gekennzeichnet durch**
- eine Messgabel (2), die aus wenigstens zwei miteinander verbundenen Biegebalken (2.1, 2.2) besteht, welche zueinander bewegbar sind, wobei
- an wenigstens einem Biegebalken (2.1, 2.2) eine Tastkuppe (5, 6) vorgesehen ist und
- am Biegebalken (2.1, 2.2) wenigstens ein Dehnmessstreifen (7, 8, 9, 10) eingebunden ist, der über elektrische Leitungen mit einer Auswerteeinheit elektrisch verbunden ist.

2. Messeinrichtung nach Anspruch 1, **dadurch gekennzeichnet, dass** wenigstens zwei Dehnmessstreifen (7 - 10) beidseitig am Biegebalken (2.1, 2.2) angebracht sind.

3. Messeinrichtung nach Anspruch 1 oder 2, **dadurch gekennzeichnet, dass** vier Dehnmessstreifen (7 -10) derart am Biegebalken (2.1, 2.2) eingebunden sind, dass bei einer mechanischen Beanspruchung der Biegebalken (2.1, 2.2) zueinander der äußere Dehnmessstreifen (7, 10) gedehnt und der innere Dehnmessstreifen (8, 9) gestaucht wird.

4. Messeinrichtung nach einem der Ansprüche 1 bis 3, **dadurch gekennzeichnet, dass** die Messgabel (2) im Bereich des verbundenen Teils mit einem Gehäuse bzw. Grundkörper (4) der Messeinrichtung (1) fest verbunden ist.

5. Messeinrichtung nach einem der Ansprüche 1 bis 4, **dadurch gekennzeichnet, dass** am Grundkörper (4) der Messeinrichtung (1) sich zwei auswechselbare Zentrierringe (12, 13) befinden, die so angebracht sind, dass die Messeinrichtung (1) in Funktion zentriert im Rohr (20) geführt wird.

6. Messeinrichtung nach Anspruch 5, **dadurch gekennzeichnet, dass** sich der eine Zentrierring (12) oberhalb einer elektrischen Anschlussdose (11) befindet und der weitere Zentrierring (13) als hinterer Abschluss der Messeinrichtung (1) dient.
